# EUROPEAN PATENT APPLICATION

(11) **EP 3 038 359 A1**
(43) Date of publication of application: **29.06.2016**
(21) Application number: 14307150.4
(22) Date of filing: 23.12.2014
(51) Int. Cl.: H04N 13/04

(54) **A method for indicating a sweet spot in front of an auto-stereoscopic display device, corresponding auto-stereoscopic display device and computer program product**

(71) Applicant: Thomson Licensing, 92130 Issy-les-Moulineaux (FR)
(72) Inventor: Borel, Thierry, 35576 Cesson Sevigne (FR); Drazic, Valter, 35576 Cesson Sevigne (FR)
(74) Representative: Huchet, Anne

(57) **Abstract**

In one embodiment, it is proposed an auto-stereoscopic display device comprising a display panel configured to deliver n different images views, with n a integer greater or equal to two; and an optical filter which is configured to control diffusion directions of said n different images views. The auto-stereoscopic display device is remarkable in that it comprises opaque materials (201, 202) positioned in said display panel in such way that a content indicating a direction that a user should follow in order to be in a correct sweet spot, is delivered on an edge of different views, when said display panel is on.

## Description

### Technical Field

The present disclosure relates to the field of multi-views auto-stereoscopic display devices.

### Background

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Auto-stereoscopic display devices (either based on the use of a parallax barrier, or based on the use of a micro-lens array) enables the display of multi-view content. As mentioned in the document US2014/0168390, when a user is positioned at an "optimal distance", he perceives only a first view from one eye, and a second view from another eye (see Figure 5 of document US2014/0168390, and the optimal viewing distance *"OVD"*). Therefore, he perceives a 3D effect, without having to wear 3D glasses (either passive or active glasses). The set of positions at an optimal viewing distance define regions in space named sweet spots or also viewing spots, i.e. these regions located in front of auto-stereoscopic display device are regions where a user can only perceive one view per eye, enabling the viewing of a 3D content without interferences (see for example the article entitled *"Comparative study of auto-stereoscopic displays for mobile devices"* by A. Boev and A. Gotchev). It should be noted that, the higher a number of views an auto-stereoscopic display devices provide, the smaller the sweet spots are. Moreover, when the user is not positioned at the "optimal distance" (that defines the sweet spots), he can perceive from at least one eye, an additional view. The perception of an additional view alters the rendering of the 3D effect.

Therefore, it is important to help a user to position him correctly in a sweet spot.

To achieve such objective, it can be possible to use tracking systems, using cameras that can track the position of the eyes of the user and adapt the content consequently. The main drawback of this solution is that it can only work with one user.

The present technique does not limit the number of users and can work in the case of a family sitting on a couch watching the same content.

In order to inform a user/viewer for finding out a position enabling him to see a 3D content without troubles (i.e. to indicating him the sweet spots), one skilled in the art could also use one of the techniques described in the documents WO2012143836 or FR2888000. Indeed, techniques of documents WO2012143836 (Fig.4a-e), and FR2888000 (see the arrow indicating a direction in Fig. 2 in views I2 and I8) furnish such information.

However, the techniques of documents WO2012143836 and FR2888000incorporate such information in the 3D image data itself. Indeed, in document WO2012143836, the indicator generator device, referenced 140, generates a signal combining 3D image data and an indicator, and then such signal is displayed. In document FR2888000, it is mentioned that the indicator can be removed during the display. Therefore, it means that the signal received by the display device is also a combination of 3D image data and an indicator (as in document WO2012143836).

The proposed technique is an alternative of the ones cited previously, that does not need to modify the 3D content data (i.e. two different views) itself.

### Summary

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure is directed to an auto-stereoscopic display device comprising a display panel configured to deliver *n* different images views, with *n* a integer greater or equal to two; and an optical filter which is configured to control diffusion directions of said *n* different images views. Such auto-stereoscopic display device is remarkable in that it comprises opaque materials positioned in said display panel in such way that a content indicating a direction that a user should follow in order to be in a correct sweet spot, is delivered on an edge of different views, when said display panel is on.

More precisely, it is proposed to modify the structure of a multi-view auto stereoscopic display devices by adding an opaque material in particular positions of the display panel (also named an electroluminescent display). Therefore, when the user is positioned at the extreme borders of opposite sweet spots, an image (or a logo, or a symbol) appears indicating in which direction the viewer has to move. Hence, such technique enables a user to be placed correctly in front of a multi-view auto stereoscopic display device.

In a preferred embodiment, the auto-stereoscopic display device is remarkable in that said opaque material has fixed opacity properties, and that said edge of different views is an edge of extreme views.

In a preferred embodiment, the auto-stereoscopic display device is remarkable in that said opaque materials are smart glasses of which light transmission properties can be changed under application of either a voltage and/or a light and/or heat.

The opaque materials can be derived from the document US2010/0046060which describes an optical filter that can be controlled by the intensity of a voltage or a current.

In a preferred embodiment, the auto-stereoscopic display device is remarkable in that said edge of different views is an edge of extreme views.

In a preferred embodiment, the auto-stereoscopic display device is remarkable in that said opaque materials are positioned below color filter of sub-pixels comprised in said display panel.

It should be noted that in such embodiment, the photolithographic process has to be modified in order to position the opaque materials below the color filter.

In a preferred embodiment, the auto-stereoscopic display device is remarkable in that said opaque materials are positioned on color filter of sub-pixels comprised in said display panel.

The photolithographic method used in order to manufacture an auto-stereoscopic display device having these features is unchanged versus classical method. Indeed, only the photolithography masks are modified to enlarge black matrix size on selected sub-pixels and to decrease the color filter size on those same sub-pixels.

In a preferred embodiment, the auto-stereoscopic display device is remarkable in that said optical filter comprises at least one parallax barrier.

In another embodiment of the present disclosure, it is proposed an auto-stereoscopic display device in which said optical filter comprises at least one lenticular array.

In a preferred embodiment, the auto-stereoscopic display device is remarkable in that said optical filter comprises at least one integral photography plate with a fly's-eye lens array.

In another embodiment, it is proposed a method for indicating, in front of an auto-stereoscopic display device, a correct sweet spot. Such method is remarkable in that it comprises displaying on extreme views delivered by said auto-stereoscopic display device, a content indicating a direction that a user should follow in order to be located in a correct sweet spot.

In a preferred embodiment, such method is remarkable in that said displaying is done during a first period of time, and in that when such first period of time has exceeded, displaying on said extreme views content related to content displayed on other views instead of said content indicating a direction that a user should follow in order to be located in a correct sweet spot.

In another embodiment, it is proposed a method for indicating, in front of an auto-stereoscopic display device, a correct sweet spot. The method is remarkable in that it comprises controlling light transmission properties of materials positioned in a display panel in said auto-stereoscopic display device according to a voltage and/or a light and/or heat; and displaying on edge of different views a content indicating a direction that a user should follow in order to be located in a correct sweet spot.

In another embodiment, the method for indicating is remarkable in that said displaying is done during a first period of time, and in that when such first period of time has exceeded, displaying on said edge of different views content related to content displayed on other views instead of said content indicating a direction that a user should follow in order to be located in a correct sweet spot.

According to an exemplary implementation, the different steps of the methods are implemented by a computer software program or programs, this software program comprising software instructions designed to be executed by a data processor of a relay module according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory"*), for example a CD-ROM (which stands for *"Compact Disc - Read Only Memory"*) or a microelectronic circuit ROM or again a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more sub-programs of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware etc.

### Brief description of the figures

The above and other aspects of one or more embodiments of the invention will become more apparent by the following detailed description of exemplary embodiments thereof with reference to the attached drawings in which:
- Figure 1(a) to 1(c) present a part of an auto-stereoscopic display device that can deliver four different views;
- Figure 2 details a part of a display panel according to one embodiment of the invention;
- Figure 3(a) and 3(b) represent images of arrows that are perceived by a viewer in the case that one eye of the viewer is on the edge of a sweet spot;
- Figure 4 presents an example of a device that can be used to perform one or several steps of methods disclosed in the present document.

### Detailed description

An auto-stereoscopic display device comprises, for example:
- a display panel which is an array of pixels (such display panel can be for example a TFT LCD screen (for Thin-film-transistor liquid-crystal display screen)) that can be viewed as an image forming means, and
- an optical filter positioned in front of such display panel that controls the diffusion directions of rays of light emitted by the display panel. The optical filter can be either a parallax barrier (or a combination of parallax barriers, that intend to block light in some directions), or a lenticular sheet (that intends to refract the received light from pixels), or an integral lens sheet (as in document EP0780727).

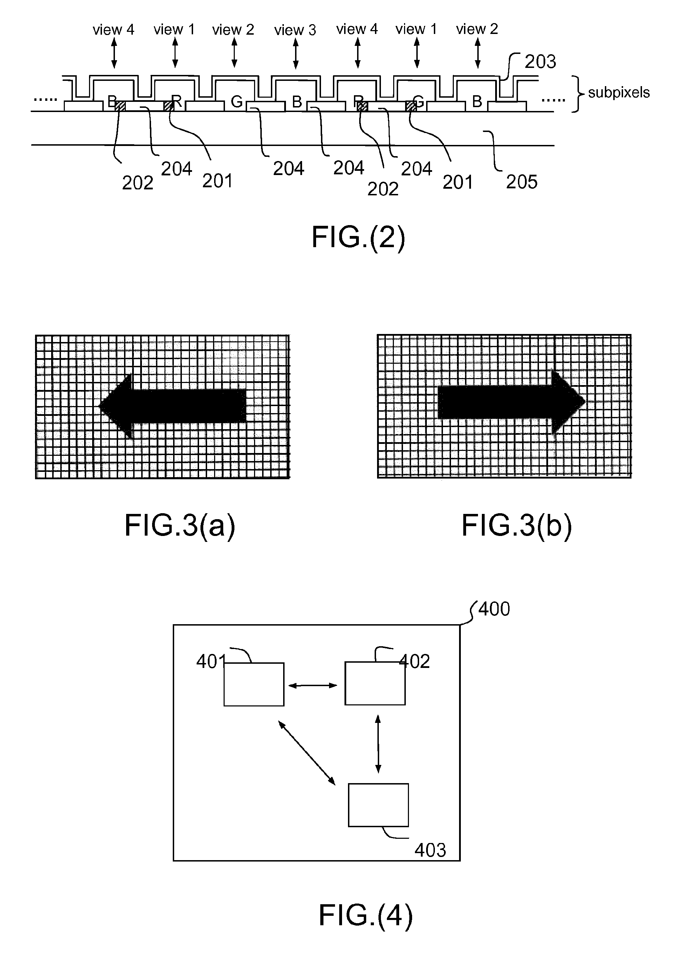

More precisely, a pixel comprises several sub-pixels as explained for example in document US2014/0226205. As detailed in the Figure 3 of document US2014/0226205, a pixel can be made of three sub-pixels, and each of these sub-pixels is associated with a primary color (blue, red or green) and with an image view. An example of an arrangement of these sub-pixels in a display panel is depicted in the Figure 4 of document US 2014/0226205, in the case that three images views are delivered by the auto-stereoscopic display device. At last, when all the sub-pixels associated to one view (as in the Figure 5 of document US2014/0226205, with a view 1) are perceived by an eye of a viewer, an image associated with the view 1 is visualized by the viewer. It is the goal of the optical filter to deviate correctly the light emitted by the sub-pixels in such way that a viewer can correctly see the different images views. In the case that the auto-stereoscopic display device can handle *n* different images views, with *n* an integer greater or equal to two, it is possible to generate such *n* different images views from only two views (named stereoscopic images) as explained in the document US2013/0050187.

It should be noted that the display panel can be positioned in front of a light source and that the sub-pixels are commanded in order to modulate the light via controlling means that can handle addressing schemes (in the case of a reflective LCD, the light source is not positioned in front of a light source). Moreover, each sub-pixel is associated with a switching element (that is usually a transistor, such as a TFT (for Thin Film Transistor).

These examples of panel display can obviously be modified in order to handle *n* different views, with *n* an integer greater or equal to two.

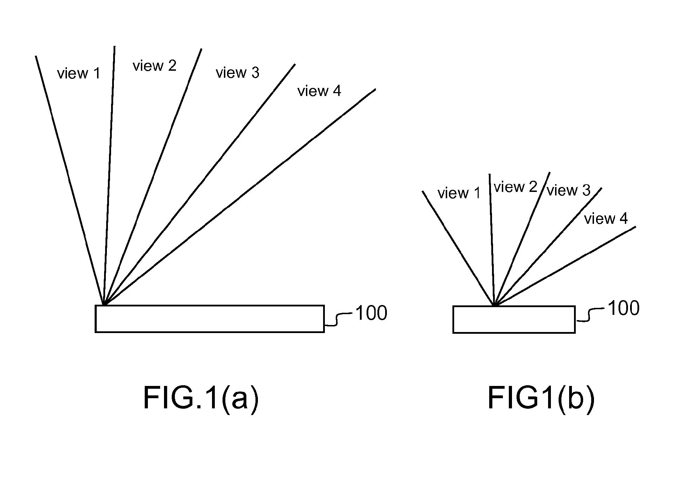

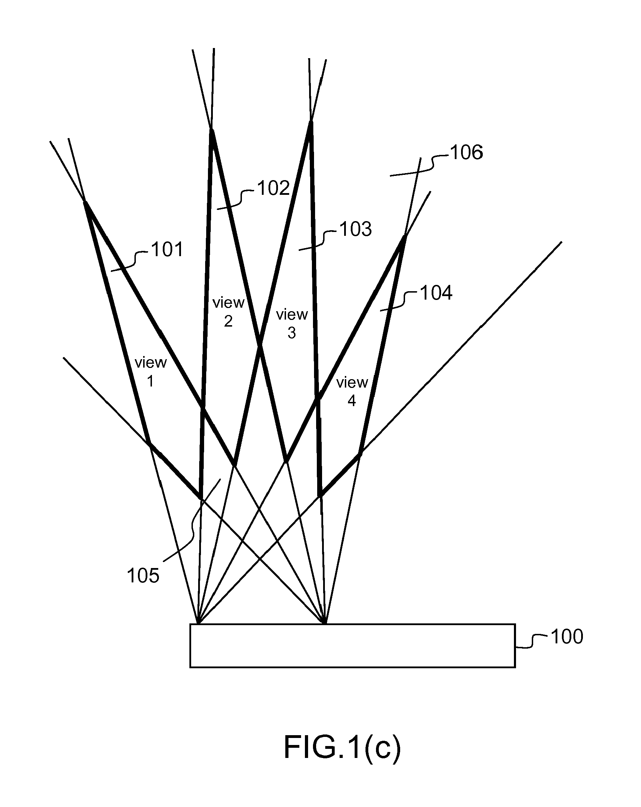

The Figure 1(a) presents a part of an auto-stereoscopic display device that can deliver four different views. More precisely, Figure 1(a) illustrates that an auto-stereoscopic display device, referenced 100, can deliver for different views via four sub-pixels positioned in a first part of the display panel, defining four viewing cones in space. The Figure 1(b) illustrates that the auto- stereoscopic display device 100 can deliver four different views via four different sub-pixels positioned in a second part of the display panel, defining four other viewing cones in space. The intersection of these viewing cones is depicted in Figure 1(c). For the sake of explanation, only these intersections of viewing cones is represented, but it should be noted that when all sub-pixels are emitting light, all the intersection of viewing cones should be taken into account in order to define sweet spots. In the Figure 1(c), the diamond zones referenced 101, 102, 103 and 104 correspond to sweet spots. It should be noted that in that case the views 1 and views 4 are considered as being extreme views. It should be noted that the expression "extreme views" is well known for one skilled in the art. Indeed, it is used in numerous documents such as the document US7126598or the document *"*Toward the Light Field Display: Autostereoscopic Rendering via a Cluster of Projectors" by Ruigang Yang et al., or the document EP1955553. The other zones (i.e. not the sweet spot) are a mixture of views, and are location where content cannot be viewed correctly. For example, the zone referenced 105 is a zone where both views 1 and 2 are mixed. In the same way, the zone referenced 106 is a zone where both views 3 and 4 are mixed.

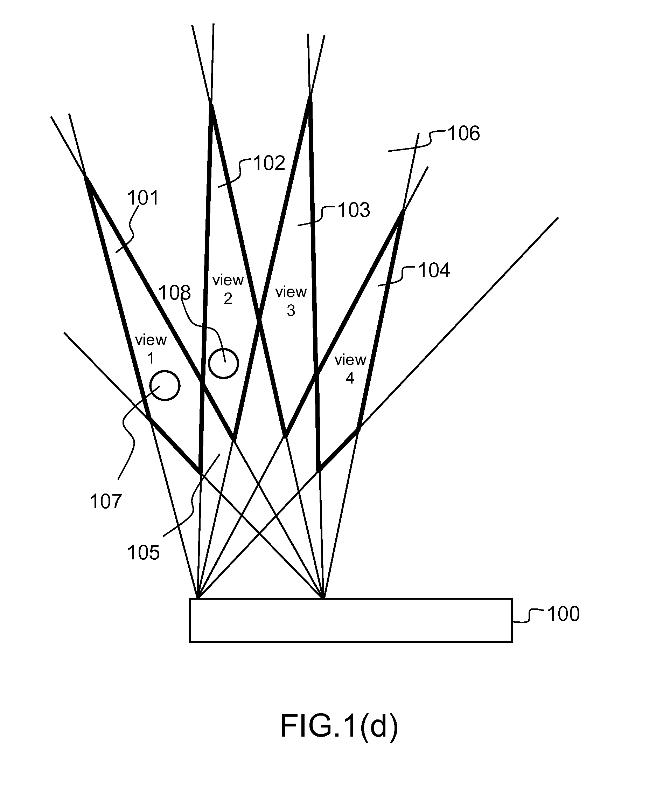

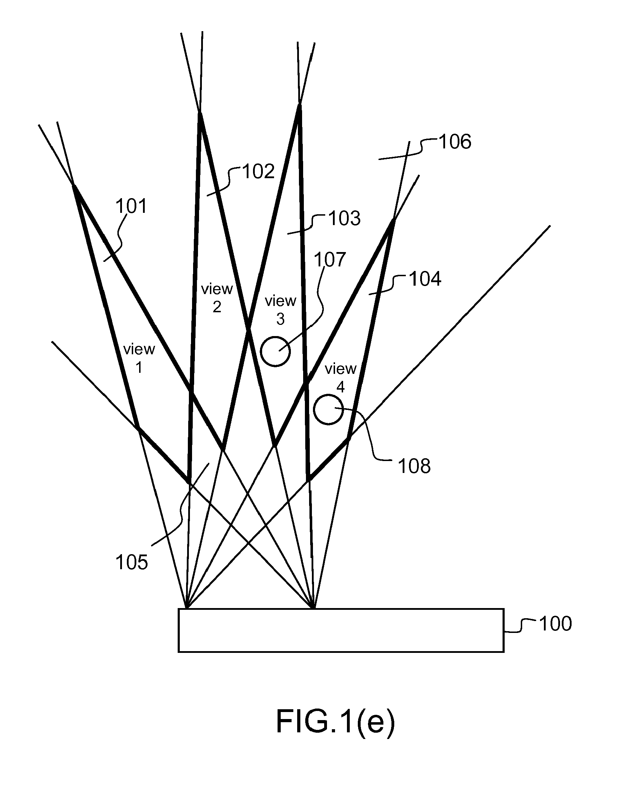

For example, when the eyes of a viewer, referenced 107 and 108, are positioned as depicted in Figure 1(d), i.e. the eyes 107 and 108 are respectively positioned in zones 101 and 102, the viewer is positioned in a correct sweet spot in the sense that he can perceive 3D content. In the same way, when the eyes 107 and 108, are positioned as depicted in Figure 1(e), i.e. the eyes 107 and 108 are respectively positioned in zones 103 and 104, the viewer is positioned in a correct sweet spot in the sense that he can also perceive 3D content. Obviously, if the eyes 107 and 108 are also positioned in zones 102 and 103, the viewer can also perceive 3D content.

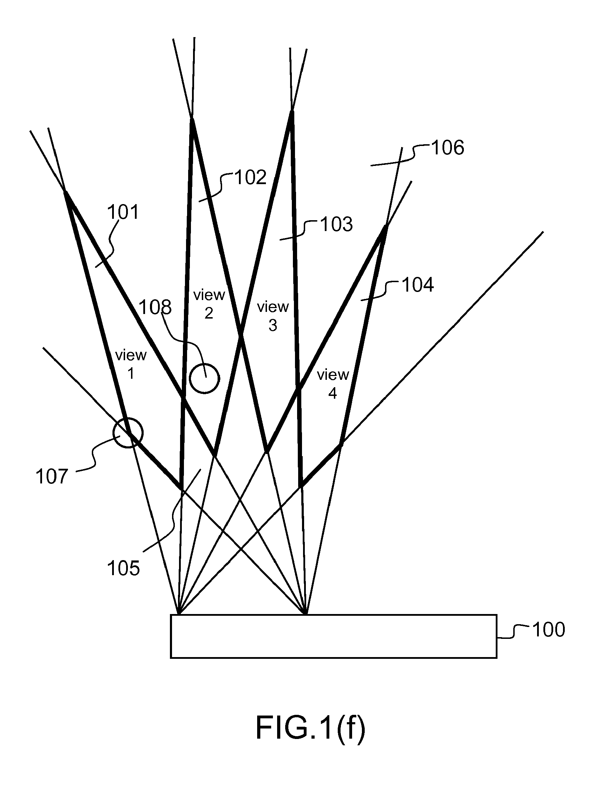

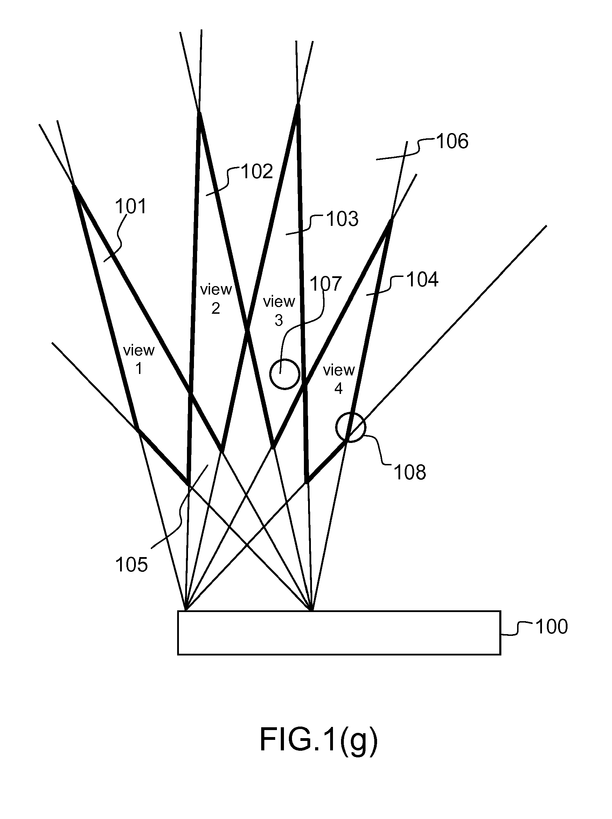

Figures 1(f) and 1(g) depict some cases where the viewer is not correctly positioned in front of an auto-stereoscopic device. Indeed, in these cases, the two eyes 107 and 108 are not both comprised in the diamond zones (for example the eye 107 is located outside or at the edge of the diamond zone 101 in Figure 1(f), and the eye 108 is located outside or at the edge of the diamond zone 104 in Figure 1(g)).

The present technique enables a viewer to correctly position his eyes in sweet spots (i.e. to put his eyes in diamond zones 101 to 104).

The Figure 2 details a part of a display panel according to one embodiment of the invention.

In this figure 2, some sub-pixels of a display panel are represented: each sub-pixel comprises an ITO (Indium Tin Oxide) film, referenced 203, and they are linked by the use of black matrix elements, referenced 204, and these sub-pixels are positioned on a glass substrate referenced 205. Color filters are either red (noted R), green (noted G) or blue (noted B). More precisely, in this embodiment, it is proposed to add, at the display panel level, a particular material on sub-pixels of extreme views (for example the views 1 and 4 in the case of an auto-stereoscopic display device as depicted in Figures 1(a)-(g)). Such particular material is in one embodiment an opaque material. In another embodiment, such opaque material is a smart glass, which is a functional glass material. For example, the opaque material to be included in a part of a classical color filter can be a tunable plasmonic filter as defined in the document US 2010/0046060. In the case that the opaque material is a smart glass, it is not necessary to position it on sub-pixels of extreme views. Indeed, as it is possible to control the opacity of these materials, individually by using a variation of voltage for example, it enables a better flexibility for the positioning of these elements.

More precisely, in one embodiment, an opaque material referenced 201 is positioned close to a part of a sub-pixel associated with the first view (the view 1). An opaque material referenced 202 is positioned close to a part of a sub-pixel associated with the final view (the view 4). It should be that, in one embodiment of the invention, not all the sub-pixels associated with the view 1 have such opaque material, and that not all the sub-pixels associated with the view 4 have such opaque material. Indeed, the opaque materials are positioned in such way that the collection of the opaque material provides information to the viewer, when the display panel is on. Such information is intended to help the viewer to correctly position himself in front of an auto-stereoscopic display device.

In another embodiment of the invention, opaque materials are comprised in the ITO film 203 and are position in suitable positions in order to provide a similar effect as the one of the previous embodiment.

In another embodiment of the invention, the opaque materials are positioned in some of the color filters of a TFT LCD panel (see the figure describing the vertical structure of a color TFT LCD panel) in the white paper entitled *"*Overview of the theory and construction of TFT display panels" published by Sequoia Technology Ltd, in December 2003.

An example of a result of a repartition of opaque material 201 is given in Figure 3(a). Indeed, Figure 3(a) represents an arrow that is perceived by a viewer in the case that the eye 107 is on the edge of the zone 101. Such information enables to avoid the situation depicted in Figure 1(f).

An example of a result of a repartition of opaque material 202 is given in Figure 3(b). Indeed, Figure 3(b) represents an arrow that is perceived by a viewer in the case that the eye 108 is on the edge of the zone 104. Such information enables to avoid the situation depicted in Figure 1(g).

In order to achieve such result, in one embodiment of the invention, such opaque material can be integrated in the color filter of sub-pixels. For example, the proposed technique proposes to modify the classical structure of sub-pixels as depicted in document US7292294 by introducing an opaque material in the edge of a color filter associated with a sub-pixel, for some sub-pixels. Hence, a part of the color filter is dedicated to the delivering of the information to correctly position a viewer in front of the auto-stereoscopic display device.

In another embodiment of the invention, the use of an opaque material is substituted by the display on some of the views delivered by the auto-stereoscopic display device of the placement information (as the arrows described in Figures 3(a) and 3(b)). In such embodiment, the use of some of the views to deliver such placement information is done during a limited period of time, and then, these views are reassigned to the delivering of content.

Figure 4 presents an example of a device that can be used to perform one or several steps of methods disclosed in the present document.

Such device referenced 400 comprises a computing unit (for example a CPU, for *"Central Processing Unit"*), referenced 401, and one or more memory units (for example a RAM (for *"Random Access Memory"*) blocks in which intermediate results can be stored temporarily during the execution of instructions a computer program, or a ROM block in which, among other things, computer programs are stored, or an EEPROM (*"Electrically-Erasable Programmable Read-Only Memory"*) block, or a flash block) referenced 402. Computer programs are made of instructions that can be executed by the computing unit. Such device 400 can also comprise a dedicated unit, referenced 403, constituting an input-output interface to allow the device 400 to communicate with other devices. In particular, this dedicated unit 403 can be connected with an antenna (in order to perform communication without contacts), or with serial ports (to carry communications "contact"). It should be noted that the arrows in Figure 4 signify that the linked unit can exchange data through buses for example together.

In an alternative embodiment, some or all of the steps of the method previously described, can be implemented in hardware in a programmable FPGA (*"Field Programmable Gate Array"*) component or ASIC ("*Application-Specific Integrated Circuit"*) component.

In an alternative embodiment, some or all of the steps of the method previously described, can be executed on an electronic device comprising memory units and processing units as the one disclosed in the Figure 4.

At last, it should be noted that the present technique can be applied to auto-stereoscopic display devices that are based on parallax barriers, or lenticular arrays or techniques that intend to reproduce a light field such as integral photography plate with a fly's-eye lens array.

## Claims

1. An auto-stereoscopic display device comprising a display panel configured to deliver *n* different images views, with *n* a integer greater or equal to two; and an optical filter which is configured to control diffusion directions of said *n* different images views, said auto-stereoscopic display device being **characterized in that** it comprises opaque materials positioned in said display panel in such way that a content indicating a direction that a user should follow in order to be in a correct sweet spot, is delivered on an edge of different views, when said display panel is on.

2. The auto-stereoscopic display device according to claim 1, **characterized in that** said opaque material has fixed opacity properties, and that said edge of different views is an edge of extreme views.

3. The auto-stereoscopic display device according to claim 1, **characterized in that** said opaque materials are smart glasses of which light transmission properties can be changed under application of either a voltage and/or a light and/or heat.

4. The auto-stereoscopic display device according to claim 3, **characterized in that** said edge of different views is an edge of extreme views.

5. The auto-stereoscopic display device according to any of claims 1 to 4, **characterized in that** said opaque materials are positioned below color filter of sub-pixels comprised in said display panel.

6. The auto-stereoscopic display device according to any of claims 1 to 4, **characterized in that** said opaque materials are positioned on color filter of sub-pixels comprised in said display panel.

7. The auto-stereoscopic display device according to any of claims 1 to 6 **characterized in that** said optical filter comprises at least one parallax barrier.

8. The auto-stereoscopic display device according to any of claims 1 to 6 **characterized in that** said optical filter comprises at least one lenticular array.

9. The auto-stereoscopic display device according to any of claims 1 to 6 **characterized in that** said optical filter comprises at least one integral photography plate with a fly's-eye lens array.

10. A method for indicating, in front of an auto-stereoscopic display device, a correct sweet spot, said method being **characterized in that** it comprises controlling light transmission properties of materials positioned in a display panel in said auto-stereoscopic display device according to a voltage and/or a light and/or heat; and displaying on edge of different views a content indicating a direction that a user should follow in order to be located in a correct sweet spot.

11. The method for indicating according to claim 10, **characterized in that** said displaying is done during a first period of time, and **in that** when such first period of time has exceeded, displaying on said edge of different views content related to content displayed on other views instead of said content indicating a direction that a user should follow in order to be located in a correct sweet spot.

12. A computer-readable and non-transient storage medium storing a computer program comprising a set of computer-executable instructions to implement a method a method for indicating, in front of an auto-stereoscopic display device, a correct sweet spot, when the instructions are executed by a computer, wherein the instructions comprise instructions, which when executed, configure the computer to perform a method of claims 10 to 11.
